Europäisches Patentamt

(19) European Patent Office

Office européen des brevets

(11) Numéro de publication: **0 246 969**
**B1**

(12) **FASCICULE DE BREVET EUROPEEN**

(45) Date de publication du fascicule du brevet: **23.01.91**

(21) Numéro de dépôt: **87401127.3**

(22) Date de dépôt: **20.05.87**

(51) Int. Cl.⁵: **G 21 D 9/00, G 21 C 1/00**

(54) **Petit réacteur nucléaire à eau pressurisée et à circulation naturelle.**

(30) Priorité: **22.05.86 FR 8607300**

(43) Date de publication de la demande:
**25.11.87 Bulletin 87/48**

(45) Mention de la délivrance du brevet:
**23.01.91 Bulletin 91/04**

(84) Etats contractants désignés:
**CH DE ES GB IT LI SE**

(56) Documents cités:
**EP-A-0 174 380**
**FR-A-1 414 277**
**FR-A-1 533 997**
**US-A-3 276 965**
**US-A-3 290 222**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Fajeau, Maurice
512, rue du Saint Sépulcre
F-84120 Pertuis (FR)**

(74) Mandataire: **Mongrédien, André et al
c/o BREVATOME 25, rue de Ponthieu
F-75008 Paris (FR)**

Courier Press, Leamington Spa, England.

## Description

L'invention concerne un réacteur nucléaire à eau pressurisée et à circulation naturelle de petite taille, de type calogène ou électrogène, destiné à une utilisation locale.

Un tel réacteur peut notamment être implanté sur une plate-forme de forage en mer, ou encore sur un fleuve ou sur un plan d'eau, dans une région isolée ne disposant pas de l'énergie électrique nécessaire au fonctionnement d'une installation industrielle.

Compte tenu de ces utilisations d'un type très particulier, un tel réacteur doit être totalement autonome et transportable sans risque entre un site de chargement, dans lequel son coeur est mis en place, et son site d'utilisation. Ce réacteur doit aussi remplir des conditions de sûreté intrinsèque à long terme, incluant de préférence l'hypothèse d'un chavirement, puis qu'il doit être implanté et transporté en mer ou en rivière. Enfin, l'utilisation très locale d'un tel réacteur impose qu'il soit réalisé de façon particulièrement simple, afin de réduire son coût, d'accroître sa fiabilité et de smplifier son exploitation.

Dans le cas particulier de la propulsion nucléaire des navires, on utilise déjà des réacteurs nucléaires à eau pressurisée de petite taille. Ces réacteurs sont généralement directement dérivés par homothétie des grands réacteurs à eau pressurisée. En particulier, ils comprennent toujours des pompes de circulation de l'eau du circuit primaire ainsi que des circuits annexes assurant l'extraction de la puissance résiduelle à l'arrêt et en cas de chavirement du navire. Ces réacteurs sont par conséquent trop complexes et trop coûteux pour pouvoir être affectés à la production locale d'électricité ou de chaleur conformément à l'invention.

La présente invention a précisément pour objet un réacteur nucléaire à eau pressurisée de conception originale et particulièrement simple remplissant toutes les conditions de sûreté imposées, notamment en cas de chavirement, sans avoir recours à aucun circuit de refroidissement de secours annexe, ce réacteur étant par ailleurs autopressurisé et fonctionnant en circulation naturelle, ce qui permet de supprimer les cannes chauffantes du pressuriseur et les pompes primaires indispensables dans les réacteurs actuels.

A cet effet et conformément à l'invention, il est proposé un réacteur nucléaire à eau pressurisée et à circulation par convection naturelle, comprenant une cuve principale remplie d'eau surmontée par un ciel de vapeur pressurisée, ladite cuve contenant en partie inférieure le coueur du réacteur et en partie supérieure un générateur de vapeur, des structures internes canalisant la circulation de l'eau entre le coeur et le générateur de vapeur, une enceinte de confinement doublant extérieurement la cuve principale et délimitant avec cette dernière un espace intermédiaire, caractérisé en ce que, la cuve principale n'étant pas calorifugée, l'espace intermédiaire comporte une zone supérieure remplie de gaz neutre pressurisé, une zone intermédiaire remplie d'eau, communiquant avec la zone supérieure, et délimitée entre l'enceinte et une virole mince reliant de façon étanche l'enceinte de confinement à la cuve, au-dessus du coeur du réacteur, et une zone inférieure remplie d'eau et délimitée entre la virole mince, la cuve et l'enceinte, l'enceinte de confinement étant noyée dans un liquide de refroidissement extérieur tel que de l'eau et équipée intérieurement d'un calorifuge dans la zone inférieure de l'espace intermédiaire, sauf dans une partie inférieure de l'enceinte de confinement située à un niveau inférieur au coeur du réacteur.

Cette conception particulière de la cuve principale, de l'enceinte de confinement et de l'espace intermédiaire délimité entre ces deux composants permet à la fois de limiter les fuites thermiques à une valeur aussi faible que possible au fonctionnement nominal du réacteur et d'évacuer à court terme la puissance résiduelle dissipée dans le coeur du réacteur, quelle que soit l'inclinaison de celui-ci, lorsque l'extraction de puissance par le circuit secondaire du générateur de vapeur est arrêtée. On aboutit ainsi à un réacteur nucléaire sans circuit auxiliaire, ne nécessitant aucune surveillance en continu, apte à fonctionner sans intervention pendant la durée d'usure du coeur et utilisable de façon intrinsèquement sûre dans tous les cas où l'on peut garantir que l'enceinte de confinement reste noyée dans le liquide de refroidissement extérieur.

Dans un mode de réalisation préféré de l'invention, la zone supérieure de l'espace intermédiaire est formée dans une partie supérieure sphérique de l'enceinte de confinement. Cette forme particulière favorise la condensation de la vapeur formée par l'ébullition de l'eau dans la zone intermédiaire lors du fonctionnement du réacteur à faible puissance, l'extraction de puissance par le circuit secondaire étant arrêtée.

Dans ce même mode de réalisation préféré, en dehors de la partie supérieure sphérique de l'enceinte de confinement, la cuve principale et l'enceinte de confinement présentent une configuration cylindrique centrée sur un axe vertical commun, ladite virole mince ayant également une configuration cylindrique centrée sur ledit axe et étant fixée par son extrémité supérieure à l'enceinte de confinement, au bas de ladite partie supérieure sphérique et, par son extrémité inférieure, à la cuve principale.

De préférence, des moyens d'équilibrage de pression sont prévus entre la zone inférieure et les zones supérieure et intermédiaire de l'espace intermédiaire. Ces moyens peuvent être constitués par un tube en col de cygne faisant saillie vers le haut dans la zone intermédiaire, à partir de la virole mince.

Selon un autre aspect intéressant de l'invention, la cuve principale contient également un réflecteur annulaire entourant le coeur du réacteur, ce réflecteur étant formé de plusieurs secteurs séparés, normalement situés au niveau du coeur, chaque secteur étant apte à se déplacer vers le haut à l'aide de moyens élastiques lors d'une inclinaison du réacteur dépassant un angle donné, par exemple d'environ 60°. En cas de chavirement du réacteur, cette caractéristique permet d'assurer l'étouffement de la puissance dissipée par le coeur en introduisant de l'antiréactivité dans ce dernier. On compense ainsi le fait que dans ces conditions, la chute des éléments absorbants ne peut avoir lieu ou n'est pas complète.

Selon un autre aspect de l'invention, la cuve principale contient au moins un système d'éléments absorbants aptes à se déplacer dans des tubes guides prévus dans le coeur du réacteur, lors de l'actionnement de moyens de commande externes à la cuve, ces moyens de commande créant un mouvement de rotation transmis à une tige filetée logée dans la cuve et sur laquelle est monté un écrou portant ledit système, par l'intermédiaire d'un mécanisme comprenant un coupleur magnétique assurant la transmission du mouvement de rotation au travers de la cuve.

Ces moyens de commande peuvent aussi être externes à l'enceinte de confinement; dans ce cas, un deuxième coupleur magnétique est disposé sur ladite enceinte de confinement pour assurer la transmission du mouvement de rotation au travers de cette dernière.

Des moyens internes à la cuve sont alors prévus pour déconnecter automatiquement ledit système d'éléments absorbants de l'écrou lorsque la pression dans la cuve excède une pression donnée et lorsque le niveau de l'eau dans la cuve descend en-dessous d'un niveau donné.

On peut aussi envisager de faire chuter manuellement le système d'éléments absorbants par l'intermédiaire d'un tube reliant la partie supérieure de la cuve à l'extérieur de l'enceinte, et permettant de faire monter la pression dans la cuve par injection de gaz. Ce tube peut aussi être utilisé pour injecter du bore ou tout autre poison nucléaire soluble. Ce tube, équipé d'une membrane claquante, est normalement fermé par des moyens d'obturation.

Le coeur du réacteur ayant une partie active de hauteur donnée, les guides dépassent de préférence cette partie active d'une demi-fois cette hauteur vers le bas et d'une fois cette hauteur vers le haut.

Les éléments absorbants ont alors une longueur égale à une fois et demie la hauteur de la partie active du coeur, une moitié de ces éléments étant absorbants sur toute leur longueur et l'autre moitié de ces éléments étant absorbants sur les deux tiers supérieurs de leur longueur.

On décrira maintenant, à titre d'exemple non limitatif, un mode de réalisation préféré de l'invention en se référant aux dessins annexés dans lesquels:

—la figure 1 est une vue en coupe verticale illustrant de façon schématique la chadière d'un réacteur nucléaire à eau pressurisée de petite taille réalisé conformément aux enseignements de l'invention,

—la figure 2 est une vue en coupe verticale représentant schématiquement l'agencement du réflecteur entourant le coeur du réacteur représenté sur la figure 1, et

—la figure 3 est une vue en coupe verticale représentant à plus grande échelle et de façon schématique le tube en col de cygne assurant l'équilibrage des pressions entre les zones inférieure et intermédiaire de l'espace intermédiaire formé entre la cuve et l'enceinte du réacteur de la figure 1.

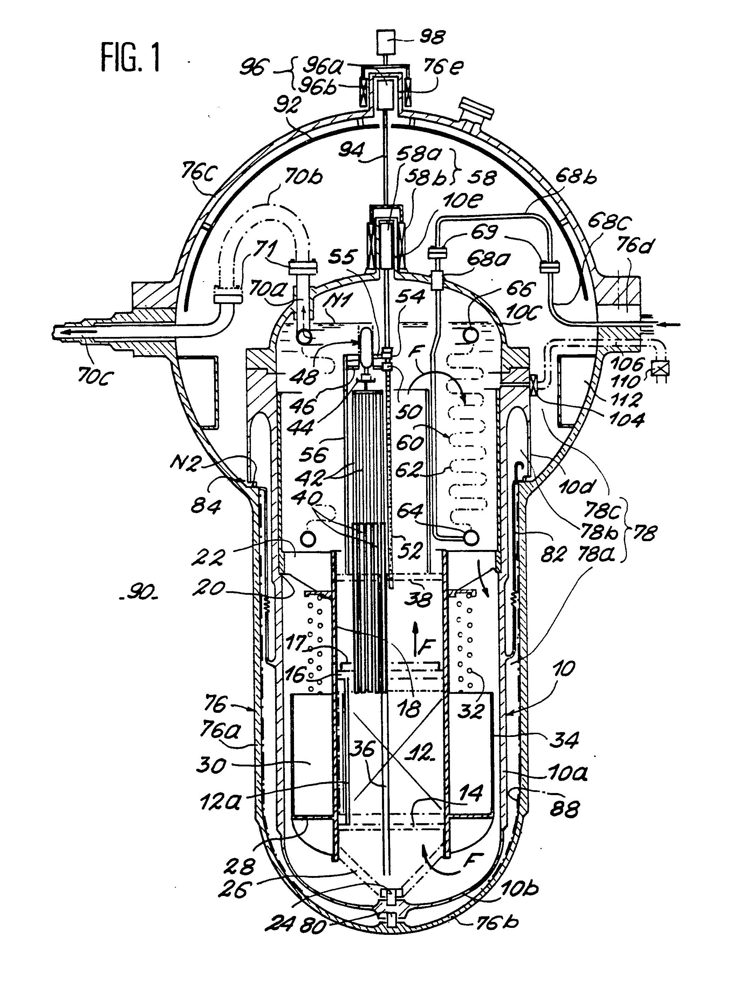

La chaudière de réacteur nucléaire à eau pressurisée représentée sur la figure 1 comprend une cuve principale 10 à l'intérieur de laquelle est confiné de façon étanche l'ensemble du circuit primaire du réacteur. Cette cuve principale 10 présente une paroi cylindrique de révolution 10a normalement centrée sur un axe vertical. Cette paroi 10a est prolongée à son extrémité inférieure par un fond hémisphérique 10b. La cuve 10 est fermée à son extrémité supérieure par un couvercle 10c, également de forme hémisphérique. Le couvercle 10c est fixé sur une bride formant le bord supérieur de la paroi 10a par des moyens de fixation démontables tels que des goujons (non représentés).

Conformément à une caractéristique importante de l'invention, la cuve principale 10 n'est pas calorifugée et elle est doublée extérieurement par une enceinte de confinement 76 délimitant avec la cuve 10 un espace intermédiaire 78.

L'enceinte de confinement 76 présente de façon générale une symétrie de révolution autour d'un axe vertical confondu avec l'axe de la cuve 10. De façon plus précise, l'enceinte 76 comprend une paroi cylindrique de révolution 76a entourant sur la majeure partie de sa hauteur la paroi 10a de la cuve, à l'exception de la partie supérieure de cette paroi. En-dessous de la paroi 76a, l'enceinte 76 est prolongée par un fond 76b doublant extérieurement le fond 10b de la cuve. Enfin, la paroi latérale 76a est prolongée vers le haut par une paroi sphérique 76c. L'hémisphère supérieure de cette paroi 76c constitue un couvercle fixé de façon démontable, par exemple au moyen de goujons, sur une bride 76d constituant le bord supérieur de plus grand diamètre de l'hémisphère inférieur de cette même paroi 76c.

Comme l'illustre la figure 1, la cuve 10 repose par une virole cylindrique 10d sur un rebord annulaire délimitant intérieurement la jonction entre la paroi cylindrique 76a et la paroi sphérique 76c de l'enceinte de confinement. Cette virole 10d est solidarisée par son extrémité supérieure de la bride formée à l'extrémité supérieure de la paroi 10a, de façon à délimiter avec cette dernière un espace annulaire.

A son extrémité inférieure, la cuve 10 est également centrée par rapport à l'enceinte 76 par un pion 80 disposé selon leur axe commun et reçu dans des logements appropriés formés dans leurs fonds respectifs 10b et 76b.

Le coeur 12 du réacteur est logé dans la partie inférieure de la cuve 10 et selon l'axe vertical de celle-ci. Il est formé de crayons combustibles tels que 12a, identiques à ceux qui sont utilisés dans les réacteurs électrogènes de conception classique et disposés verticalement. La partie centrale active du coeur 10 ainsi formé es repérée schématiquement par une croix sur la figure 1. Les crayons 10a sont supportés par une grille inférieure de coeur 14, horizontale et percée au pas triangulaire de trous de passage d'eau, de diamètre supérieur au diamètre des crayons, et de trous borgnes servant de logement aux embouts de maintien prolongeant les crayons combustibles à leur extrémité inférieure. En partie haute du coeur, l'écartement entre les crayons 10a est préservé par une première grille intermédiaire horizontale 16, percée de façon identique à la grille inférieure 14, sauf que les trous borgnes sont remplacés par des trous traversants permettant le montage et le démontage des crayons.

Une deuxième grille intermédiaire horizontale 17 est placée immédiatement au-dessus de la grille 16. Elle est également percée de trous de passage d'eau mais ne présente pas de trou au-dessus des embouts supérieurs des crayons. Lors de la mise en place des crayons 10a, cette grille 17 n'est pas fixée et peut coulisser légèrement vers le haut.

Lors du montage (qui s'effectue à l'extérieur de la cuve 10) les crayons 12a sont introduits par le bas au travers des trous de passage d'eau formés dans la grille inférieure 14. Lorsque leur embout supérieur est reçu dans le trou correspondant de la première grille intermédiaire 16, les crayons sont encore déplacés vers le haut d'une petite distance, en soulevant la deuxième grille intermédiaire 17, afin de dégager leurs embouts inférieurs des trous de passage d'eau de la grille 14, pour les introduire dans les trous borgnes de cette même grille.

Les crayons 12a sont alors en place. Leur maintien en cas de choc ou de chavirement est alors assuré par la fixation de la grille 17 sur la grille 16.

Les grilles 14 et 16 sont elles-mêmes fixées à leur périphérie sur une virole cylindrique de révolution 18, d'axe vertical confondu avec l'axe de la cuve. Cette virole 18 entoure le coeur 12 du réacteur et se prolonge verticalament vers le haut, de façon à séparer le débit d'eau ascendant relativement chaud sortant du coeur du débit d'eau descendant relativement froide revenant vers le coeur, comme on le verra ultérieurement.

La virole 18 repose elle-même sur un épaulement formé intérieurement dans la paroi cylindrique 10a de la cuve, par une pièce annulaire 20 reliée à l'extrémité supérieure de la virole 18 par des plaques verticales 22 orientées radialement par rapport à l'axe de la cuve.

A son extrémité inférieure, la virole 18 est centrée sur le fond 10b de la cuve par un pion 24 relié à l'extrémité inférieure de la virole 18 par des bras obliques 26 et reçu dans un logement approprié formé dans le fond de la cuve, selon l'axe vertical de celle-ci.

Autour de son extrémité inférieure, la virole 18 est munie d'un support annulaire horizontal 28 dont le bord extérieur est prolongé vers le haut par une virole cylindrique de révolution 34, sur toute la hauteur de la partie active du coeur.

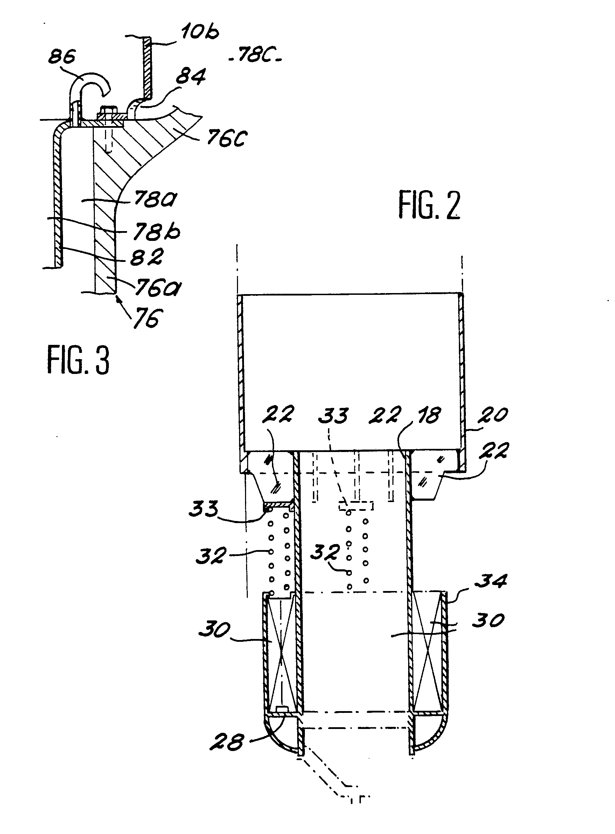

Comme l'illustre plus précisément la figure 2, un réflecteur annulaire 30 est logé autour du coeur dans l'espace annulaire formé entre les viroles 18 et 34. Ce réflecteur 30 repose normalement sur le support 28. De préférence, il est divisé sur toute sa périphérie en plusieurs secteurs d'égales dimensions aptes à se déplacer verticalement indépendamment l'un de l'autre. De façon plus précise, chacun des secteurs du réflecteur 30 peut se déplacer verticalement vers le haut à l'aide d'un ressort de suspension 32 interposé entre la face supérieure de ce secteur de réflecteur et une plaque annulaire horizontale 33 située au-dessus de celui-ci. La plaque 33 peut notamment être supportée par les plaques verticales 22, comme l'illustre la figure 2.

Les grilles 14 et 16 supportant les crayons combustibles constituant le coeur 12 du réacteur servent également à supporter des tubes guides verticaux 36 dont l'un seulement est représenté sur la figure 1, pour en faciliter la lecture. Si on appelle $h$ la hauteur de la partie active du coeur 12 du réacteur, les tubes guides 36 dépassent cette hauteur de 0,5 fois cette hauteur $h$ vers le bas et d'une fois cette hauteur $h$ vers le haut.

Afin d'assurer le positionnement des tubes guides 36 à leur extrémité supérieure, cette extrémité est fixée sur une grille supérieure horizontale 38 largement percée et fixée à sa périphérie sur la virole 18.

Les tubes guides 36 sont disposés de façon à assurer le guidage en coulissement vertical de crayons ou éléments absorbants 40, également disposés verticalement dans la cuve 10. Ces éléments absorbants 40 sont prolongés vers le haut par des tiges verticales 42 de diamètre plus faible, reliées par exemple en trois groupes à trois têtes d'absorbants 44, pour former un système d'éléments absorbants. Pour simplifier, un seul de ces systèmes est représenté sur la figure 1.

La longueur de chaque élément absorbant 40 est égale de préférence à une fois et demie la hauteur $h$ de la partie active du coeur 12. De plus, environ la moitié des éléments absorbants 40 de chacun des systèmes sont absorbants sur toute leur longueur, alors que l'autre moitié de ces éléments absorbants ne sont absorbants que sur les deux tiers supérieurs de leur longueur.

La tête 44 de chacun des systèmes d'éléments absorbants est suspendue à un bras horizontal 46, orienté radialement par rapport à l'axe de la cuve, par l'intermédiaire d'une pince à flotteur 48. Cette pince à flotteur 48 est réalisée de la manière décrite et revendiquée dans la demande de brevet européen EP—A—0 232 635 correspondant au FR—A—2 590 715 au nom du Commissariat à l'Energie Atomique. Elle permet d'assurer la chute automatique des systèmes d'éléments absorbants, aussi bien lorsque le niveau $N_1$ de l'eau à l'intérieur de la cuve descend en-dessous d'un niveau minimal acceptable, que lorsque la pression à l'intérieur de la cuve excède une pression maximale acceptable. Dans les conditions normales de fonctionnement du réacteur, les flotteurs des pinces à flotteurs 48 se trouvent normalement en-dessous du niveau $N_1$, de sorte que les systèmes d'éléments absorbants restent accrochées à ces pinces.

Les bras 46 assurant le supportage des systèmes d'éléments absorbants 40 sont fixés sur un écrou 50 vissé sur une tige filetée 52 disposée selon l'axe vertical de la cuve.

La tige filetée 52 est supportée de façon tournante et centrée à l'intérieur de la cuve par une butée centrale 54. Cette butée 54 est elle-même reliée par des bras horizontaux 55, orientés radialement, à l'extrémité supérieure d'une virole cylindrique de révolution 56 d'axe confondu avec l'axe vertical de la cuve 10. La virole 56 repose par son extrémité inférieure sur la grille 38. En plus de son rôle de supportage de la butée 54, la virole 56 remplit dans la partie supérieure de la cuve 10 le même rôle que la virole 18 dans la partie inférieure, c'est-à-dire qu'elle assure la séparation des écoulements montants et descendants de l'eau du circuit primaire. La virole 56 supporte également des rails verticaux le long desquels sont guidés les bras 46 lors de leur déplacement vertical.

A son extrémité inférieure, la tige filetée 52 est reçue dans un trou formé au centre de la grille 38 et permettant d'en limiter le débattement latéral.

La tige filetée 52 se prolonge vers le haut au-delà de la butée 54, pour être solidarisée du rotor magnétique interne mené 58a d'un coupleur magnétique 58 permettant d'entraîner en rotation la tige filetée 52 au travers de la paroi du couvercle 10c de la cuve, sans rupture de l'étanchéité de cette dernière. A cet effet, le rotor interne 58a est reçu dans une excroissance en doigt de gant 10e formée selon l'axe vertical du couvercle 10c.

Le coupleur magnétique 58 comprend également un rotor magnétique externe menant 58b disposé autour du rotor 58a, à l'extérieur de l'excroissance en doigt de gant 10e.

Le rotor 58b est lui-même fixé à l'extrémité inférieure d'une tringlerie 94, disposée selon l'axe commun de la cuve et de l'enceinte, et dont l'extrémité supérieure est fixée au rotor magnétique interne mené 96a d'un deuxième coupleur magnétique, 96, permettant de transmettre le mouvement de rotation au travers de la paroi supérieure 76c de l'enceinte. A cet effet, le rotor interne 96a est placé dans un excroissance en doigt de gant 76e de la paroi 76c et le coupleur magnétique 96 comprend un rotor magnétique externe menant 96b, placé à l'extérieur de cette excroissance, autour du rotor interne 96a. L'entraînement en rotation de ce rotor externe 96b est commandé par un servomoteur 98 agissant sur ce rotor externe par une tringlerie appropriée.

Ce servomoteur 98 constitue le seul dispositif de régulation externe du circuit primaire. En modifiant la réactivité dans le coeur, il permet de maintenir la pression de ce circuit dans les limites souhaitées.

Pour compléter la description des composants du circuit primaire situés à l'intérieur de la cuve principale 10, on voit sur la figure 1 qu'un générateur de vapeur annulaire 60 est disposé dans la partie supérieure de la cuve 10, entre la paroi 10a de la cuve et la virole 56.

Ce générateur de vapeur 60 est du type à simple passe et à surchauffe. Il est formé de deux séries de tubes enroulés en hélice, schématisés en 62, ces deux séries étant disposées de façon imbriquée mais indépendante.

A leur extrémité inférieure, les tubes 62 sont soudés sur deux collecteurs d'eau alimentaire semi-toriques 64 et, à leur extrémité supérieure, sur deux collecteurs de vapeur semi-toriques 66. Les collecteurs d'eau alimentaire 64 sont situés immédiatement au-dessus des plaques radiales 22, alors que les collecteurs de vapeur 66 sont situés juste en-dessous de la surface libre de l'eau contenue dans la cuve principale 10.

Des bouchons (non représentés) sont généralement implantés dans les collecteurs d'eau alimentaire 64, en face de chacun des tubes 62, pour permettre la mise en place de diaphragmes de pied et l'inspection ultérieure des tubes. De façon comparable, des bouchons sont généralement implantés en face des tubes 62 dans les deux collecteurs de vapeur 66, afin de faciliter le passage d'une sonde d'inspection et de permettre l'obturation éventuelle d'un tube défectueux.

De préférence, le montage du générateur de vapeur 60 est conçu de façon à laisser aux tubes 62 la souplesse nécessaire pour qu'en fonctionnement normal ils soient toujours soumis à des contraintes de compression. Dans ces conditions, toute fissure localisée a tendance à se refermer et ne diminue pas la résistance du tube au flambage; une telle fissure ne peut donc aboutir qu'à une microfuite. En revanche, la mise en pression intérieure des tubes lors d'une opération d'entretien peut mettre instantanément en évidence de tels défauts.

L'arrivée de l'eau alimentaire du circuit secondaire dans les collecteurs 64 se fait par deux tubes verticaux 68a traversant de façon étanche le couvercle 10c de la cuve. De même, l'évacuation de la vapeur admise dans les collecteurs 66 s'effectue par deux tubes verticaux 70a traversant également de façon étanche le couvercle 10c de la cuve principale.

Au-dessus du couvercle 10c de la cuve, les tubes 68a sont raccordés sur des tubes coudés 68b situés dans l'espace intermédiaire 78. A leur extrémité opposée, ces tubes coudés 68b sont eux-mêmes raccordés sur des tubes d'arrivée d'eau 68c traversant horizontalement et de façon étanche la bride 76d formée dans la partie de plus grand diamètre de la paroi sphérique 76c de l'enceinte. Les tubes 68a, 68b et 68c sont reliés entre eux par des raccords étanches et démontables 69.

De façon comparable, les tubes verticaux de sortie de vapeur 70a sont raccordés sur des tubes coudés 70b situés dans l'espace intermédiaire 78. A leur extrémité opposée, ces tubes 70b sont eux-mêmes raccordés à des tubes 70c traversant horizontalement et de façon étanche la bride 76d. Des raccords étanches et démontables 71 sont ici encore interposés entre les tubes 70a, 70b et 70c.

Les tubes coudés 68b et 70b situés dans l'espace intermédiare 78 permettent d'absorber les dilatations différentielles.

L'eau contenu dans la cuve du réacteur est surmontée par un ciel de vapeur, obtenu par mise sous vide après fermeture du couvercle 10c. Les cannes chauffantes du pressuriseur utilisé dans les réacteurs existants peuvent ainsi être supprimées.

Le niveau $N_1$ de l'eau à l'intérieur de la cuve est normalement situé nettement au-dessus du bord supérieur de la virole 56, afin de permettre sans perte de charge la circulation de l'eau au-dessus de cette virole. Par ailleurs, la virole 56 est également pourvue de trous (non représentés) le long de la zone de surchauffe du générateur de vapeur 60, afin de permettre le libre passage de l'eau à ce niveau.

Dans les conditions normales de fonctionnement du réacteur, une circulation de l'eau contenue dans la cuve principale 10 s'établit par convection naturelle dans le sens des flèches F sur la figure 1. Ainsi, l'eau relativement chaude sortant à la partie supérieure du coeur 12 du réacteur s'écoule vers le haut dans la partie centrale de la cuve, en étant canalisée par la virole 18, puis par la virole 56. Au-dessus du bord supérieur de cette dernière, l'eau effectue un changement de direction à 180° pour redescendre dans la zone annulaire délimitée entre la paroi latérale 10 de la cuve et les viroles 56, puis 18.

En parcourant la partie supérieure de cette zone annulaire, l'eau du circuit primaire circule autour des tubes 62 du générateur de vapeur 60, ce qui a pour effet de transférer à l'eau alimentaire du circuit secondaire la chaleur transportée par l'eau du circuit primaire. En se refroidissant, cette dernière réchauffe l'eau alimentaire du circuit secondaire pour la porter à ébullition. Dans le bas de la cuve 10, l'eau du circut primaire effectue à nouveau un changement de direction à 180° pour franchir le bord inférieur de la virole 18 et remonter à l'intérieur de celle-ci en traversant à nouveau le coeur 12 du réacteur.

Conformément à l'invention, une virole mince 82, de forme généralement cylindrique et, d'axe vertical confondu avec les axes de la cuve et de l'enceinte, est disposée entre les parois cylindriques 10a et 76a de celles-ci, au-dessus du niveau supérieur du coeur 12. Par "virole mince" on entend une virole dont l'épaisseur est telle que l'étanchéité soit réalisée entre les zones intermédiaires 78a et 78b, sans avoir à résister à une différence de pression.

De façon plus précise, le bord supérieur de la virole 82 est raccordé de façon étanche à l'enceinte 76, au niveau de l'extrémité supérieure de la paroi latérale 76a de cette dernière. Par ailleurs, le bord inférieur de la virole 82 est raccordé de façon étanche à la paroi latérale 10a de la cuve, à un niveau légèrement supérieur à celui des grilles intermédiaires 16 et 17.

Dans la configuration selon l'invention qui vient d'être décrite, l'espace 78 formé entre la cuve et l'enceinte comprend une zone inférieure 78a délimitée entre la cuve 10 et l'enceinte 76, en-dessous de la virole 82, une zone intermédiaire 78b délimitée entre la virole 82, la virole 10d et le haut de la paroi 10a de la cuve, et une zone supérieure 78c délimitée entre la partie sphérique 76c de l'enceinte et l'extrémité supérieur de la cuve.

Conformément à l'invention, la zone inférieure 78a est remplie d'eau, normalement à l'état liquide, aux conditions normales de fonctionnement du réacteur. La zone intermédiaire 78b est également remplie d'eau jusqu'à un niveau $N_2$ situé approximativement au niveau du raccordement de la virole mince 82 sur l'enceinte 76. L'eau contenue dans cette zone 78b est surmontée d'un gaz neutre tel que de l'argon sous pression, qui communique avec de l'argon sous pression également contenu dans la zone supérieure 78c par des passages 84 formés à la base de la virole 10b assurant le supportage de la cuve. A titre d'exemple, pour une température de sortie du générateur de vapeur d'environ 210°C, la pression de gaz neutre dans les zones 78b et 78c est voisine de 19 bars.

Comme l'illustre plus précisément la figure 3, afin d'assurer l'équilibrage en pression entre la zone inférieure 78a et les zones intermédiaire et supérieure 78b et 78c, tout en empêchant toute vidange de la zone inférieure 78a même en cas d'inclinaison ou de renversement du réacteur, un tube en col de cygne 86 est raccordé sur le bord supérieur de la virole 82, en faisant saillie vers le haut dans la zone intermédiaire 78b.

De plus, l'enceinte 76 est équipée intérieurement d'un calorifuge 88 sur toute sa paroi cylindrique 76a et sur la partie supérieure du fond 76b. Au contraire, la cuve 10 n'est pas calorifugée.

Enfin, l'enceinte 76 est partiellement ou entièrement noyée dans un liquide de refroidissement extérieur 90 pouvant être de l'eau de mer ou de rivière.

Le calorifuge 88 est conçu et dimensionné afin que les fuites thermiques soient faibles au fonctionnement nominal du réacteur, tout en étant suffisantes pour évacuer la puissance résiduelle quelle que soit l'orientation du réacteur, lorsque l'extraction de puissance par le circuit secondaire est stoppée.

La pression de gaz neutre dans la zone supérieure 78c et dans la zone intermédiaire 78b est déerminée afin d'assurer la non ébullition de l'eau contenue dans les zones 78a et 78b dans les conditions normales de fonctionnement du réacteur, c'est-à-dire lorsque les pompes (non représentées) du circuit secondaire fonctionnent normalement.

Lors d'un arrêt des pompes du circuit secondaire, le coeur du réacteur continue à dissiper une certaine puissance résiduelle conduisant à une augmentation de température de l'eau contenue dans la cuve. Cette augmentation de température conduit à l'ébullition de l'eau contenue dans les zones intermédiaire 78b et inférieure 78a. Dans cette dernière zone, le calorifuge 88 est dimensionné de telle sorte que la vapeur ainsi formée se condense sur la partie supérieure de la paroi cylindrique 76a sous l'effet de l'échange thermique avec l'eau extérieure 90.

De façon comparable, la vapeur formée dans la zone intermédiaire 78b parvient dans la zone supérieure 78c par les paassages 84, ou elle se condense sur la paroi sphérique 76c pour redescendre dans la zone intermédiaire sous forme liquide. Afin de canaliser l'eau condensée sur cette paroi 76c, celle-ci est doublée intérieurement par une cloison hémisphérique 92 sur son hémisphère supérieure formant couvercle.

De plus, les tubes d'arrivèe d'eau alimentaire 68b situés dans la zone 78c assurent une certaine condensation de la vapeur formée dans cette zone.

Grâce à ces caractéristiques, l'évacuation de la puissance résiduelle du réacteur à l'arrêt est assurée automatiquement, même si le circuit secondaire n'est pas disponible.

En cas d'inclinaison du réacteur, la surface d'échange utile entre la cuve principale 10 et l'eau contenue dans la zone intermédiaire 78b diminue jusqu'à disparaître complètement en position horizontale.

En revanche, dans la zone inférieure 78a, l'augmentation de l'inclinaison du réacteur a pour effet d'amener progressivement la vapeur formée dans cette zone en contact avec la partie non calorifugée du fond 76b de l'enceinte. L'échange thermique assurant le refroidissement de cette zone inférieure 78a augmente donc de façon très importante avec l'inclinaison du réacteur.

Une membrane claquante 104 peut être placée dans un tube 106 débouchant dans la cuve 10 immédiatement en-dessous du couvercle 10c et reliant l'intérieur de la cuve à l'extérieur de l'enceinte 76, après avoir traversé la bride 76d formée dans la partie de grand diamètre de la paroi sphérique 76c de l'enceinte. Le tube 106 est normalement fermé par un robinet et un bouchon 110. Cette membrane 104 est réglée pour ne se déchirer qu'en cas de surpression par rapport à la cuve. Elle permet, en cas de blocage du mécanisme de commande des éléments absorbants 40 et de nécessité de retour à froid, d'injecter de l'azote, pour provoquer le dépinçage et la chute des systèmes d'éléments absorbants sous l'effet d'un accroîssement de la pression à l'intérieur de la cuve.

Un boîtier d'instrumentation 112 est également implanté dans la zone supérieure 78c, en-dessous de la bride 76d. Dans ce boîtier sont logés des capteurs tels que des capteurs de pression et de niveau de l'eau dans la cuve et dans l'enceinte, des capteurs de température, etc. Cette implantation permet à la fois de maintenir ces capteurs à une température ambiante locale aussi basse que possible et de les loger dans une zone non concernée par l'enlèvement du couvercle de l'enceinte permettant le démontage des structures internes de la cuve lorsqu'un remplacement du coeur est nécessaire.

Dans ce cas, après enlèvement du couvercle formé par l'hémisphère supérieur de la paroi 76c, les tubes de raccordement d'eau alimentaire 68b et de vapeur 70b du circuit secondaire sont démontés, de même que la tringlerie 94. Le couvercle 10c de la cuve peut alors être enlevé et l'ensemble des structures internes est sorti de la cuve et remplacé par un ensemble neuf.

Après mise en place du couvercle 10, l'air de la cuve est pompé par mise sous vide, ce qui permet d'obtenir un ciel de vapeur permettant le fonctionnement du réacteur de manière autopressurisée, la circulation de l'eau du circuit primaire s'effectuant en convection naturelle comme décrit précédemment.

Dans les conditions normales de fonctionnement, l'extraction de la chaleur produite dans le coeur 12 vers l'utilisation est assurée par l'eau circulant dans le circuit secondaire. En plus des pompes précédemment mentionnées, ce circuit compend des vannes de régulation placées dans les tubes 68c. Les fuites thermiques sont normalement limitées par le calorifuge 88 garnissant intérieurement la paroi cylindrique 76a de l'enceinte. Dans ces conditions aucune ébullition de l'eau contenue dans les zones 78a et 78b ne se produit.

Lors d'un arrêt des pompes du circuit secondaire, le coeur 12 du réacteur continue à dissiper une certaine puissance résiduelle. L'échauffement de l'eau du circuit primaire qui en résulte amène à ébullition l'eau contenue dans les zones 78a et 78b. Comme on l'a vu précédemment, le dimensionnement du calorifuge 88 est alors tel qu'il assure un refroidissement suffisant par le liquide extérieur 90 pour condenser la vapeur formée entre la virole 82 et la paroi 76a dans la zone inférieure 78a. De même, la vapeur formée dans la zone intermédiaire 78b s'échappe par les passages 84 dans la zone supérieure 78c où elle se condense sur la paroi 76c, sous l'effet du refroidissement assuré par le liquide extérieur 90.

Lorsqu'une inclinaison du réacteur se produit, l'eau contenue dans l'espace intermédiaire 78b s'échappe vers l'espace supérieur 78c, de sorte que ces deux zones n'assurent pratiquement plus le refroidissement du circuit primaire. En revanche, la vapeur qui continue à se former dans la zone inférieure 78a vient alors en contact avec le fond non calorifugé de l'enceinte 76, ce contact étant d'autant plus grand que l'inclinaison de la cuve est important. La condensation de la vapeur formée s'accroît donc sensiblement avec l'inclinaison, de sorte que l'efficacité du refroidissement du circuit primaire par l'eau contenue dans la zone inférieure 78a est d'autant plus grande que le réacteur est incliné.

La puissance résiduelle dissipée dans le coeur peut donc être évacuée quelle que soit l'inclinaison du réacteur. De plus, la puissance dissipée dans le coeur du réacteur est étouffée lors d'un accroîssement de la pression primaire ou d'un abaissement du niveau $N_1$ de l'eau contenue dans la cuve, par la chute automatique des systèmes d'éléments absorbants commandée par les dispositifs 48.

Dans le cas où cet étouffement ne se produirait pas ou serait seulement partiel, notamment en raison d'une inclinaison plus ou moins grande du réacteur, la structure particulière du réflecteur annulaire 30 décrite précédemment permet d'introduire automatiquement de l'anti-réactivité supplémentaire dans le coeur, sous l'effet du déplacement vers le haut d'un ou plusieurs secteurs annulaires de ce réflecteur résultant d'une inclinaison de la cuve au-delà d'environ 60°.

Bien entendu, l'invention n'est pas limitée au mode de réalisation qui vient d'être décrit à titre d'exemple, mais en couvre toutes les variants. En particulier, on notera que les structures du coeur et du générateur de vapeur peuvent être sensiblement modifiées sans sortir du cadre de l'invention. De même, toutes les dispositions particulières prévues pour préserver la sûreté du réacteur en cas de chavirement peuvent être supprimées lorsqu'un tel risque n'existe pas. Ainsi, un réflecteur de type habituel peut alors être placé autour du coeur du réacteur.

Par ailleurs, le servomoteur de commande 98 peut aussi être placé dans la zone 78c, à l'extérieur de la cuve 10. Le coupleur magnétique 96 est alors supprimé.

## Revendications

1. Réacteur nucléaire à eau pressurisée et à circulation par convection naturelle, comprenant une cuve principale (10) remplie d'eau surmontée par un ciel de vapeur pressurisée, ladite cuve contenant en partie inférieure le coeur (12) du réacteur et en partie supérieure un générateur de vapeur (60), des structures internes (18, 56) canalisant la circulation de l'eau entre le coeur et le générateur de vapeur, et une enceinte de confinement (76) doublant extérieurement la cuve principale et délimitant avec cette dernière un espace intermédiaire (78), caractérisé en ce que, la cuve principale (10) n'étant pas calorifugée, l'espace intermédiaire (78) comporte une zone supérieure (78c), remplie de gaz neutre pressurisé, une zone intermédiaire (78b) remplie d'eau, communiquant avec la zone supérieure, et délimitée entre l'enceinte (76) et une virole mince (82) reliant de façon étanche l'enceinte de confinement à la cuve, au-dessus du coeur (12) du réacteur, et une zone inférieure (78a), remplie d'eau et délimitée entre la virole mince (82), la cuve (10) et l'enceinte (76), l'enceinte de confinement (76) étant noyée dans un liquide de refroidissement extérieur (90) et équipée intérieurement d'un calorifuge (88) dans la zone inférieure (78a) de l'espace intermédiaire, sauf dans une partie inférieure de l'enceinte de confinement située à un niveau inférieur au coeur (12) du réacteur.

2. Réacteur nucléaire selon la revendication 1, caractérisé en ce que la zone supérieure (78c) de l'espace intermédiaire est formée dans une partie supérieure sphérique (76c) de l'enceinte de confinement (76).

3. Réacteur nucléaire selon la revendication 2, caractérisé en ce que, en dehors de la partie supérieure sphérique (76c) de l'enceinte de confinement (76), la cuve principale (10) et l'enceinte de confinement (76) présentent une configuration cylindrique centrée sur un axe vertical commun, ladite virole mince (82) ayant également une configuration cylindrique centrée sur ledit axe et étant fixée par son extrémité supérieure à l'enceinte de confinement (76), au bas de ladite partie supérieure sphérique (76c) et, par son extrémité inférieure, à la cuve principale (10).

4. Réacteur nucléaire selon l'une quelconque des revendications 1 à 3, caractérisé en ce que des moyens d'équilibrage de pression (86) sont prévus entre la zone inférieure (78a) et les zones supérieure (78c) et intermédiaire (78b) de l'espace intermédiaire.

5. Réacteur nucléaire selon la revendication 4, caractérisé en ce que les moyens d'équilibrage de pression comprennent un tube en col de cygne (86) faisant saillie vers le haut dans la zone intermédiaire, à partir de la virole mince (82).

6. Réacteur nucléaire selon l'une quelconque des revendications 1 à 5, caractérisé en ce que la cuve principale (10) contient également un réflecteur annulaire (30) entourant le coeur (12) du réacteur, ce réflecteur étant formé de plusieurs secteurs séparés, normalement situés au niveau du coeur, chaque secteur étant apte à se déplacer vers le haut à l'aide de moyens élastiques (32) lors d'une inclinaison du réacteur dépassant un angle donné.

7. Réacteur nucléaire selon l'une quelconque des revendications 1 à 6, caractérisé en ce que la cuve principale (10) contient au moins un système d'éléments absorbants (40) aptes à se déplacer dans des guides (36) prévus dans le coeur (12) du réacteur, lors de l'actionnement de moyens de commande (98) externes à la cuve principale (10), ces moyens de commande (98) créant un mouvement de rotation transmis à une tige filetée (52) logée dans la cuve (10) et sur laquelle est monté un écrou (50) portant ledit système, par l'intermédiaire d'un mécanisme comprenant au moins un coupleur magnétique (58) assurant la transmission du mouvement de rotation au travers de la cuve (10).

8. Réacteur nucléaire selon la revendication 7, caractérisé en ce que les moyens de commande (98) sont placés à l'extérieur de l'enceinte de confinement, ledit mécanisme comprenant un deuxième coupleur (96) assurant la transmission du mouvement de rotation au travers de l'enceinte de confinement (76).

9. Réacteur nucléaire selon l'une quelconque des revendications 7 et 8, caractérisé en ce que des moyens (48) sont prévus pour déconnecter automatiquement ledit système de l'écrou (50) lorsque la pression dans la cuve (10) excède une pression donnée et lorsque le niveau $N_1$ de l'eau dans la cuve (10) descend en-dessous d'un niveau donné.

10. Réacteur nucléaire selon la revendication 9, caractérisé en ce qu'un tube (106) relie la partie supérieure de la cuve (10) à l'extérieur de l'enceinte, ce tube étant équipé d'une membrane claquante (104) et normalement fermé par des moyens d'obturation (10).

11. Réacteur nucléaire selon l'une quelconque des revendications 7 à 10, caractérisé en ce que, le coeur (12) du réacteur ayant une partie active de hauteur h donnée, les guides (36) dépassent cette partie active d'une demi-fois cette hauteur h vers le bas et d'une fois cette hauteur h vers le haut.

12. Réacteur nucléaire selon la revendication 11, caractérisé en ce que les éléments absorbants (40) ont une longueur égale à une fois et demie la hauteur h de la partie active du coeur (12), une moitié des éléments étant absorbants sur toute leur longueur et l'autre moitié des éléments étant absorbants sur les deux tiers supérieurs de leur longueur.

## Patentansprüche

1. Druckwasserkernreaktor mit Umlauf durch natürliche Konvektion mit einer mit Wasser, das von einer Schicht unter Druck stehenden Dampfes überlagert ist, gefüllten Hauptwanne (10), wobei die Wanne im unteren Teil den Reaktorkern (12) und im oberen Teil einen Dampfgenerator (60), interne Strukturen (18, 56), die den Wasserumlauf zwischen dem Reaktorkern und dem Dampfgenerator kanalisieren, und eine Sicherheitshülle (76) umfaßt, die außen die Hauptwanne verdoppelt und mit letzterer einer Zwischenraum (78) bildet, dadurch gekennzeichnet, daß, da die Hauptwanne (10) nicht wärmeisoliert ist, der Zwischenraum (78) einen oberen, mit neutralem, unter Druck stehendem Gas gefüllten Bereich (78c), einen mittleren, mit Wasser gefüllten Bereich (78b), der mit dem oberen Bereich in Verbindung steht und zwischen der Hülle (76) und einem dünnen Ring (82), der die Schutzhülle dicht mit der Wanne oberhalb des Reaktorkerns (12) verbindet, begrenzt wird, und einen unteren Bereich (78a) aufweist, der mit Wasser gefüllt ist und zwischen dem dünnen Ring (82), der Wanne (10) und der Hülle (76) begrenzt ist, wobei die Schutzhülle (76) in eine äußere Kühlflüssigkeit (90) getaucht ist und innen im unteren Bereich (78a) des Zwischenraums mit einer Wärmedämmung versehen ist außer in einem unteren Bereich der Schutzhülle, der sich unter dem Reaktorkern (12) befindet.

2. Kernreaktor nach Anspruch 1, dadurch gekennzeichnet, daß der obere Bereich (78c) des Zwischenraums in einem oberen, kugelförmigen Bereich (76c) der Schutzhülle gebildet ist.

3. Kernreaktor nach Anspruch 2, dadurch gekennzeichnet, daß außerhalb des oberen, kugelförmigen Bereichs der Schutzhülle (76) die Hauptwanne (10) und die Schutzhülle (76) eine zylindrische, auf eine gemeinsame, vertikale Achse zentrierte Anordnung bilden, wobei der dünne Ring (82) ebenfalls eine auf diese Achse zentrierte Konfiguration besitzt und mit seinem oberen Ende unterhalb des oberen, kugelförmigen Bereichs (76c) mit der Schutzhülle und mit seinem unteren Ende mit der Hauptwanne (10) verbunden ist.

4. Kernreaktor nach einem der Ansprüche 1 bis 3, dadurch gekennzeichnet, daß eine Druckausgleichsvorrichtung (86) zwischen dem unteren Bereich (78a) und dem oberen (78c) und mittleren Bereich (78b) des Zwischenraums vorgesehen ist.

5. Kernreaktor nach Anspruch 4, dadurch gekennzeichnet, daß die Druckausgleichsvorrichtung ein schwanenhalsförmiges Rohr (86) umfaßt, das ausgehend von dem dünnen Ring (82) nach oben in dem mittleren Bereich vorsteht.

6. Kernreaktor nach einem der Ansprüche 1 bis 5, dadurch gekennzeichnet, daß die Hauptwanne (10) außerdem einen ringförmigen Reflektor (30) umfaßt, der den Reaktorkern (12) umgibt, wobei dieser Reflektor aus mehreren, getrennten Bereichen besteht, die sich normalerweise auf der Höhe des Reaktorkerns befinden, wobei jeder Bereich geeignet ist, sich mittels einer elastischen Vorrichtung (32) bei einer Neigung des Reaktors über einen gegebenen Winkel nach oben zu bewegen.

7. Kernreaktor nach einem der Ansprüche 1 bis 6, dadurch gekennzeichnet, daß die Hauptwanne (10) wenigstens ein System von Absorberelementen (40) enthält, die geeignet sind, sich bei Betätigung einer außerhalb der Hauptwanne (10) befindlichen Steuerungsvorrichtung (98) in im Reaktorkern (12) angeordneten Führungen (36) zu bewegen, wobei diese Steuerungsvorrichtung (98) eine auf eine Gewindestange (52), die sich in der Wanne (10) befindet und auf die eine das System tragende Mutter (50) montiert ist, übertragene Drehbewegung mittels eines wenigstens einer magnetischer Kupplung (58), die die Übertragung der Rotationsbewegung durch die Wanne (10) sicherstellt, erzeugt.

8. Kernreaktor nach Anspruch 7, dadurch gekennzeichnet, daß die Steuerungsvorrichtung (98) sich außerhalb der Schutzhülle befindet, wobei der Mechanismus eine zweite Kupplung (96) umfaßt, die die Übertragung der Drehbewegung durch die Schutzhülle (76) sicherstellt.

9. Kernreaktor nach einem der Ansprüche 7 und 8, dadurch gekennzeichnet, daß eine Vorrichtung (48) zum automatischen Entkoppeln des Systems von der Mutter (50), sobald der Druck in der Wanne (10) einen vorgegebenen Druck überschreitet und sobald der Wasserstand N, in der Wanne (10) unter einen gegebenen Wert fällt, vorgesehen ist.

10. Kernreaktor nach Anspruch 9, dadurch gekennzeichnet, daß ein Rohr (106) den oberen Bereich der Wanne (10) mit dem Außenbereich der Hülle verbindet, wobei dieses Rohr mit einer Durchbruchmembran (104) versehen ist und normalerweise durch eine Verschlußvorrichtung (110) verschlossen ist.

11. Kernreaktor nach einem der Ansprüche 7 bis 10, dadurch gekennzeichnet, daß der Reaktorkern (12) des Reaktors einen aktiven Bereich von gegebener Höhe h besitzt, wobei die Führungen (36) über diesen aktiven Bereich um die Hälfte dieser Höhe h nach unten und um einmal diese Höhe h nach oben gehen.

12. Kernreaktor nach Anspruch 11, dadurch gekennzeichnet, daß die Absorberelemente (40) eine Länge gleich dem einundeinhalbfachen der Höhe *h* des aktiven Kernbereichs (12) besitzen, wobei eine Hälfte der Elemente über ihre gesamte Länge absorbierend ist, während die andere Hälfte der Elemente in den oberen zwei Dritteln ihrer Länge absorbierend ist.

**Claims**

1. Pressurized nuclear reactor with circulation by natural convection, comprising a main vessel (10) filled with water surmounted by a pressurized steam layer, said vessel containing in the lower part the reactor core (12) and in the upper part a steam generator (60), internal structures (18, 56) channelling the circulation of water between the core and the steam generator, a confinement enclosure (76) externally duplicating the main vessel and defining with the latter an intermediate space (78), characterized in that the main vessel (10) is not thermally insulated, the intermediate space (78) having an upper zone (78c) filled with pressurized neutral gas, an intermediate zone (78b) filled with water and communicating with the upper zone and defined between the enclosure (76) and a thin ferrule (82) sealingly connecting the confinement enclosure to the vessel, above the reactor core (12) and a lower zone (78a) filled with water and defined between the thin ferrule (82), the vessel (10) and the enclosure (76), the confinement enclosure (76) being immersed in an external cooling liquid (90) such as water and internally equipped with thermal insulation (88) in the lower zone (78a) of the intermediate space, except in a lower part of the confinement enclosure located at a level below the reactor core (12).

2. Nuclear reactor according to claim 1, characterized in that in the upper zone (78c) of the intermediate space is formed in a spherical upper part (76c) of the confinement enclosure (76).

3. Nuclear reactor according to claim 2, characterized in that outside the upper spherical part (76c) of the confinement enclosure (76), the main vessel (10) and confinement enclosure (76) have a cylindrical configuration centred on a common vertical axis, said thin ferrule (82) also having a cylindrical configuration centred on said axis and being fixed by its upper end to the confinement enclosure (76) at the bottom of said upper spherical part (76c) and by its lower end to the main vessel (10).

4. Nuclear reactor according to any one of the claims 1 to 3, characterized in that pressure balancing means (86) are provided between the lower zone (78a) and the upper (78c) and intermediate (78b) zones of the intermediate space.

5. Nuclear reactor according to claim 4, characterized in that pressure balancing means comprise a swan neck tube (86) projecting upwards into the intermediate zone from the thin ferrule (82).

6. Nuclear reactor according to any one of the claims 1 to 5, characterized in that the main vessel (10) also contains an annular reflector (30) surrounding the reactor core (12), said reflector being formed from several separate sectors normally located level with the core, each sector being able to move upwards with the aid of elastic means (32) during a slope of the reactor exceeding a given angle.

7. Nuclear reactor according to any one of the claims 1 to 6, characterized in that the main vessel (10) contains at least one system of absorbing elements (40) able to move in guides (36) provided in the reactor core (12) during the operation of control means (98) outside the main vessel (10), said control means (98) creating a rotary movement transmitted to a threaded rod (52) located in the vessel (10) and on which is mounted a nut (50) carrying said system, via a mechanism incorporating at least one magnetic coupler (58) ensuring the transmission of the rotary movement through the vessel (10).

8. Nuclear reactor according to claim 7, characterized in that the control means (98) are placed outside the confinement enclosure, said mechanism incorporating a second coupler (96) ensuring the transmission of the rotary movement through the confinement enclosure (76).

9. Nuclear reactor according to either of the claims 7 and 8, characterized in that means (48) are provided for automatically disconnecting said system from the nut (50) when the pressure in the vessel (10) exceeds a given pressure and when the water level $N_1$ in the vessel (10) drops below a given level.

10. Nuclear reactor according to claim 9, characterized in that a tube (106) connects the upper part of the vessel (10) to the outside of the enclosure, said tube being equipped with a burster disk (104) and normally closed by sealing means (10).

11. Nuclear reactor according to any one of the claims 7 to 10, characterized in that the reactor core (12) has an active part of given height *h*, the guides (36) passing beyond said active part by half said height *h* in the downwards direction and once said height *h* in the upwards direction.

12. Nuclear reactor according to claim 11, characterized in that the absorbing elements (40) have a length equal to one and a half times the height *h* of the active part of the core (12), half said elements being absorbing over their entire length and the other half being absorbing over the upper two thirds of their length.

FIG. 1

FIG. 3

FIG. 2